Europäisches Patentamt

European Patent Office

Office européen des brevets

(11) Veröffentlichungsnummer: **0 499 702 A1**

## (12) EUROPÄISCHE PATENTANMELDUNG

(21) Anmeldenummer: **91120946.8**

(22) Anmeldetag: **06.12.91**

(51) Int. Cl.5: **H04M 3/42**

(30) Priorität: **19.01.91 DE 4101482**

(43) Veröffentlichungstag der Anmeldung:
**26.08.92 Patentblatt 92/35**

(84) Benannte Vertragsstaaten:
**AT BE CH DE DK ES FR GB GR IT LI LU NL SE**

(71) Anmelder: **HAGENUK GMBH**
**Westring 431**
**W-2300 Kiel 1(DE)**

(72) Erfinder: **Neumann, Hans Joachim**
**Westring 371**
**W-2300 Kiel 1(DE)**

(74) Vertreter: **Hansmann, Dierk, Dipl.-Ing.**
**Patentanwälte**
**Hansmann-Klickow-Hansmann**
**Jessenstrasse 4**
**W-2000 Hamburg 50(DE)**

(54) **Fernsprechvermittlungseinrichtung mit Informationsabfragemöglichkeit.**

(57) Eine Vorrichtung zur Vermittlung von Telefongesprächen weist mindestens einen Amtsanschluß und eine über den Amtsanschluß übertragene Gebührenimpulse auswertende Gebührenauswertung auf. Darüber hinaus verfügt die Vorrichtung über einen Telefonapparat, der über ein Koppelfeld mit dem Amtsanschluß verbindbar ist. Mit der Gebührenauswertung ist eine Steuereinrichtung verbunden, die einen Datenspeicher aufweist. Der Datenspeicher ist über einen Koppler vom Telefonapparat anwählbar. Nach einer geeigneten Anwahl erfolgt die Ausgabe einer spezifischen im Bereich des Datenspeichers abgelegten Information mit einem in menschliche Sprache umsetzbaren Signalverlauf.

EP 0 499 702 A1

Die Erfindung betrifft eine Vorrichtung zur Vermittlung von Telefongesprächen, die mindestens einen Amtsanschluß und gegebenenfalls eine über den Amtsanschluß übertragene Gebührenimpulse auswertende Gebührenauswertung sowie einen über ein Koppelfeld mit dem Amtsanschluß verbindbaren Telefonapparat aufweist.

Derartige Vorrichtungen werden in einer Vielzahl von Ausführungsformen hergestellt und dienen dazu, einer Mehrzahl von Teilnehmern die Kommunikation über ein internes Fernsprechnetz bzw. ein Anwählen von externen Teilnehmern sowie einen Empfang von externen Gesprächen zu ermöglichen.

Bei vielen Anwendungsfällen werden jedoch an die Vermittlungsanlage Anforderungen gestellt, die über die bloße Eignung zur Vermittlung von Telefongesprächen hinausgehen. Insbesondere wird oftmals die zusätzliche Anforderung gestellt, Informationen bezüglich der aufgewendeten Gesprächskosten bereitzustellen. Hierzu mußten spezielle Systemapparate mit besonderen Einrichtungen für die Signalisierung und Ausgabe dieser Informationen verwendet werden, da zumindest die analogen Standardfernsprechapparate mit Ausnahme des Rufsignales nicht zur Auswertung von genormten Signalverläufen ausgerüstet sind.

Aufgabe der vorliegenden Erfindung ist es daher, eine Vorrichtung der einleitend genannten Art so zu verbessern, daß von der Vermittlungsanlage bereitgestellte Informationen auch mit Hilfe eines lediglich für eine Gesprächsführung ausgerüsteten Telefonapparates abgefragt werden können.

Diese Aufgabe wird erfindungsgemäß dadurch gelöst, daß eine Steuereinrichtung mit der Gebührenauswertung verbunden ist und einen Datenspeicher aufweist, der über eine Ausgabeeinrichtung vom Telefonapparat anwählbar und ausgebbar ausgebildet ist.

Die Anordnung einer speziellen Steuereinheit, die mit einem Datenspeicher verbunden ist, ermöglicht es, die auszugebenden Informationen derart aufzubereiten, daß sie zu einem Telefonapparat in Standardausstattung übertragen werden können. Die Übertragung wird dadurch ausgelöst, daß die Steuereinrichtung vom abfragenden Telefonapparat angewählt wird und anschließend die Informationen mit einer vom Telefonapparat akustisch ausgebbaren Signalformung überträgt.

Gemäß einer bevorzugten Ausführungsform wird vorgeschlagen, daß im Datenspeicher bevorzutete Informationen über eine eine Signalausgabe in menschlicher Sprache ermöglichende Sprachausgabevorrichtung zum Koppelfeld übertragen werden. Durch diese Ausführungsform wird eine Verwendung üblicher Telefonapparate ermöglicht und gleichzeitig einem Benutzer des Telefonapparates die von ihm gewünschte Information in einer in einfacher Weise verständlichen Darstellung übermittelt. Es können somit die ohnehin für die Übermittlung von menschlicher Sprache entsprechenden Signalverläufen vorgesehenen Übermittlungskanäle und Wandlungseinrichtungen verwendet werden. Neben der einfachen Betriebsweise wird hierdurch auch eine preiswerte Fertigung der Vermittlungseinrichtung ermöglicht, da nur eine geringe Anzahl von Sonderbauelementen erforderlich ist.

Zur Gewährleistung einer kompakten Ausführungsform wird vorgeschlagen, daß der Koppler als eine Wahlauswertung und Speisung ausgebildet ist. Über den Koppler erfolgt somit sowohl eine Verzweigung vom Telefonapparat entweder zur Steuereinrichtung oder zum Koppelfeld und andererseits eine Speisung des Telefonapparates.

Ein besonders häufig vorliegendes Informationsbedürfnis kann dadurch gestillt werden, daß im Bereich des Datenspeichers Gebührenzählerstände abgelegt sind. Es ist aber auch möglich, daß im Bereich des Datenspeichers Statusinformationen zum Betrieb der Vorrichtung abgelegt sind.

Darüber hinaus ist vorgesehen, daß im Bereich des Datenspeichers Bedienungshinweise zum Betrieb der Vorrichtung abgelegt sind. Diese Betriebsmöglichkeiten des Datenspeichers stellen jedoch nur Anwendungen dar, die besonders häufig von Betreibern von Fernsprechvermittlungseinrichtungen gefordert werden. Es ist darüber hinaus jedoch ohne weiteres möglich, andere Informationen im Bereich des Datenspeichers abzulegen. Schließlich ist auch ein Betrieb möglich, bei dem im Bereich des Datenspeichers von einem Telefonapparat übermittelte Informationen abgespeichert werden, die zu einem späteren Zeitpunkt von diesem Telefonapparat oder von einem anderen Telefonapparat abgefordert werden. Über eine geeignete Kennziffernfolge lassen sich hierbei in einfacher Weise unterschiedliche Berechtigungsebenen realisieren.

Zur Unterstützung dieser Anwahlabhängigkeit von einer im Bereich des Telefonapparates einzugebenden Ziffernfolge wird vorgeschlagen, daß im Bereich des Kopplers eine Dekodierung angeordnet ist, die eine vom Telefonapparat übertragene Ziffernfolge auswertet und an die Steuereinrichtung übergibt, welche in Abhängigkeit von den erkannten Ziffern entweder eine Sprechverbindung über das Koppelfeld veranlaßt oder über den Steuerrechner einen spezifischen Bereich im Datenspeicher anwählt.

Eine Verwendung standardisierter Bauelemente, die in großen Stückzahlen entsprechend preiswert gefertigt werden, wird dadurch ermöglicht, daß die Dekodierung im Bereich des Kopplers entsprechend standardisierter Wählverfahren durchgeführt wird.

Eine an lokal vorliegende spezielle Einsatzerfordernisse angepaßte Betriebsweise kann jedoch auch dadurch gewährleistet werden, daß die Dekodierung im Bereich des Kopplers anlagenspezifisch durchgeführt wird.

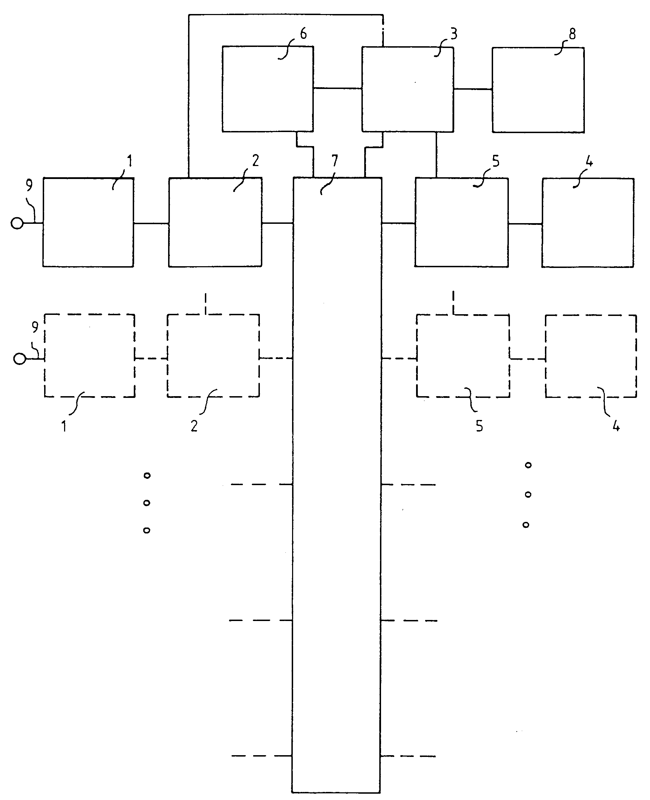

Ein Ausführungsbeispiel der vorliegenden Erfindung ist in der Zeichnung als ein Blockschaltbild der Fernsprechvermittlungseinrichtung mit Informationsabfragemöglichkeit dargestellt.

Eine Vorrichtung zur Vermittlung von Telefongesprächen besteht aus Amtsanschlüssen (1), die über jeweils eine Gebührenauswertung (2) mit einer Steuereinrichtung (3) verbunden sind. Es sind darüber hinaus Telefonapparate (4) vorgesehen, die jeweils über Koppler (5) mit der Steuereinrichtung (3) verbunden sind. Die Steuereinrichtung (3) ist darüber hinaus über eine Sprachausgabevorrichtung (6) mit einem Koppelfeld (7) verbunden, das zusätzlich mit jeder der Gebührenauswertungen (2) sowie jedem der Koppler (5) verbunden ist. Darüber hinaus weist das Koppelfeld (7) eine unmittelbare Verbindung zur Steuereinrichtung (3) auf.

Der Koppler (5) dekodiert eine vom Telefonapparat (4) ausgehende Wahlinformation und übergibt sie dem Steuerrechner (3). Der Steuerrechner (3) steuert in Abhängigkeit von der empfangenen Ziffernfolge das Koppelfeld und gegebenenfalls wird in Abhängigkeit von der empfangenen Ziffernfolge eine zugeordnete Information aus dem Datenspeicher (8) ausgelesen und an die Sprachausgabevorrichtung (6) übertragen. Die Sprachausgabevorrichtung (6) speist einen Signalverlauf in das Koppelfeld (7) ein, der dem Signalverlauf von üblicherweise über die Vermittlungseinrichtung übertragener menschlicher Sprache entspricht. Ein Benutzer des Telefonapparates (4) erhält damit die von ihm gewünschte Information über den Lautsprecher des Telefonapparates (4) in menschlicher Sprache ausgegeben, so daß für ihn eine Umsetzung der von der Steuereinrichtung (3) übermittelten Informationen nicht erforderlich ist.

Zur Ausgabe eines Gebührenstandes wird über den Telefonapparat (4) eine entsprechende Zifferfolge eingegeben, die die Steuereinrichtung (3) veranlaßt, einen aktuellen Gebührenstand aus dem Datenspeicher (8) auszulesen und über die Sprachausgabevorrichtung (6) auszugeben. Während der Durchführung eines Gespräches werden über den Amtsanschluß (1) aus einem Fernsprechnetz (9) aufgenommene Gebührenimpulse zunächst der Gebührenauswertung (2) zugeführt und die entsprechenden Zählerstände über die Steuereinrichtung (3) im Bereich des Datenspeichers (8) abgelegt.

Im Bereich des Datenspeichers (8) können darüber hinaus aber auch Statusinformationen über den Betrieb der Fernsprechvermittlungseinrichtung abgelegt werden oder allgemeine Bedienungshinweise bereitgestellt werden.

Die Dekodierung der im Bereich des Telefonapparates (4) eingegebenen Ziffernfolge kann im Bereich des Kopplers (5) entweder nach standardisierten Wählverfahren erfolgen oder aber zur Ermöglichung einer optimalen Auswertung mit geringem Aufwand anlagenspezifisch durchgeführt werden.

Bei einer mit entsprechenden Zustandserkennungen ausgerüsteten Fernsprechvermittlungseinrichtung können die im Bereich des Speichers (8) abgelegten Statusinformationen insbesondere Belegtzustände, Ausbaustufen und aktivierte Leistungsmerkmale der Fernsprechvermittlungseinrichtung betreffen. Die Bedienungshinweise können insbesondere auch als eine Bedienungsführung für die Benutzung der Fernsprechvermittlungseinrichtung strukturiert sein.

## Patentansprüche

1. Vorrichtung zur Vermittlung von Telefongesprächen, die mindestens einen Amtsanschluß und gegebenenfalls eine über den Amtsanschluß übertragene Gebührenimpulse auswertende Gebührenauswertung sowie einen über ein Koppelfeld mit dem Amtsanschluß verbindbaren Telefonapparat aufweist, dadurch gekennzeichnet, daß eine Steuereinrichtung (3) mit der Gebührenauswertung (2) verbunden ist und einen Datenspeicher (8) aufweist, der über einen Koppler (5) vom Telefonapparat (4) anwählbar und ausgebbar ausgebildet ist.

2. Vorrichtung nach Anspruch 1, dadurch gekennzeichnet, daß im Datenspeicher (8) bevorratete Informationen über eine eine Signalausgabe in menschlicher Sprache ermöglichende Sprachausgabevorrichtung (6) zum Koppelfeld (7) übertragen werden.

3. Vorrichtung nach mindestens einem der Ansprüche 1 und 2, dadurch gekennzeichnet, daß der Koppler (5) als eine Wahlauswertung und Speisung ausgebildet ist.

4. Vorrichtung nach mindestens einem der Ansprüche 1 bis 3, dadurch gekennzeichnet, daß im Bereich des Datenspeichers (8) Gebührenzählerstände abgelegt sind.

5. Vorrichtung nach mindestens einem der Ansprüche 1 bis 4, dadurch gekennzeichnet, daß im Bereich des Datenspeichers (8) Statusinformationen zum Betrieb der Vorrichtung abgelegt sind.

6. Vorrichtung nach mindestens einem der Ansprüche 1 bis 5, dadurch gekennzeichnet, daß im Bereich des Datenspeichers (8) Bedienungshinweise zum Betrieb der Vorrichtung abgelegt sind.

7. Vorrichtung nach mindestens einem der Ansprüche 1 bis 6, dadurch gekennzeichnet, daß im Bereich des Kopplers (5) eine Dekodierung angeordnet ist, die eine vom Telefonapparat (4) übertragene Ziffernfolge auswertet und an die Steuereinrichtung (3) übergibt, welche in Abhängigkeit von den erkannten Ziffern entweder eine Sprechverbindung über das Koppelfeld (7) veranlaßt oder über den Steuerrechner (3) einen spezifischen Bereich im Datenspeicher (8) anwählt.

8. Vorrichtung nach mindestens einem der Ansprüche 1 bis 7, dadurch gekennzeichnet, daß die Dekodierung im Bereich des Kopplers (5) entsprechend standardisierter Wählverfahren durchgeführt wird.

9. Vorrichtung nach mindestens einem der Ansprüche 1 bis 7, dadurch gekennzeichnet, daß die Dekodierung im Bereich des Kopplers (5) anlagenspezifisch durchgeführt wird.

| | **EINSCHLÄGIGE DOKUMENTE** | | EP 91120946.8 | |
|---|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG (Int Cl⁵)** | |
| P,X | EP - A - 0 454 421 (SOUTHWESTERN BELL TELECOM LTD) * Gesamt * -- | 1-9 | H 04 M 3/42 | |
| A | EP - A - 0 198 176 (TELEFONBAU UND NORMALZEIT GES. m.b.H.) * Beschreibung; Ansprüche * -- | 1,2, 5-9 | | |
| A | EP - A - 0 112 678 (WESTERN ELECTRIC COMPANY, INC.) * Gesamt * -- | 1,2, 5-9 | | |
| A | EP - A - 0 173 264 (SIEMENS AKTIENGESELLSCHAFT) * Gesamt * ---- | 1,2,9 | | |
| | | | **RECHERCHIERTE SACHGEBIETE (Int. Cl⁵)** H 04 M H 04 Q | |

Der vorliegende Recherchenbericht wurde für alle Patentansprüche erstellt.

| Recherchenort | Abschlußdatum der Recherche | Prüfer |
|---|---|---|
| WIEN | 27-05-1992 | ZUGAREK |